# NEW EUROPEAN PATENT SPECIFICATION

(11) **EP 4 221 873 B2**
(45) Date of publication and mention of the opposition decision: **25.11.2026**
(45) Mention of the grant of the patent: 10.04.2024
(21) Application number: 21798472.3
(22) Date of filing: 01.10.2021
(51) Int. Cl.: B01F 23/2361, B01F 23/231

(54) **CARBONATOR COMPRISING A METAL NOZZLE AND METHOD FOR FABRICATING SUCH NOZZLE**
KARBONATOR ENTHALTEND EINE KARBONISIERERMETALLDÜSE UND HERSTELLUNGSVERFAHREN EINER SOLCHEN DÜSE
SATURATEUR COMPRENANT UNE BUSE MÉTALLIQUE ET PROCÉDÉ DE FABRICATION D'UNE TELLE BUSE

(30) Priority: 01.10.2020 SE 2051144
(43) Date of publication of application: 09.08.2023
(73) Proprietor: Aarke AB, 113 31 Stockholm (SE)
(72) Inventor: BAUDTLER, Rasmus, 116 64 Stockholm (SE); WAHLIN, Erik, 139 33 Värmdö (SE)
(74) Representative: Ström & Gulliksson AB
(86) International application number: PCT/SE2021/050969
(87) International publication number: WO 2022/071870

(56) References cited:
- EP-A1- 0 073 099
- EP-A2- 0 245 664
- CN-A- 105 696 012
- CN-A- 110 664 252
- KR-A- 20150 076 986
- US-A1- 2019 291 063

## Description

### Technical field

The present disclosure generally pertains to carbonators for carbonating beverages, and more particularly to a carbonator dissolver nozzle, and to a method of manufacture of such a nozzle.

### Background art

Carbonators are used for producing carbonated beverage, such as carbonated water. Carbonators for domestic use are typically designed to be placed free-standing on a table or kitchen countertop and are operated manually by a person. Such a carbonator, a.k.a. a soda water machine, typically comprises a carbon dioxide cylinder that is connected to a plastic nozzle that is inserted into a beverage bottle that contains liquid. The carbonator further comprises an operating arrangement that allows the user to open a valve in the carbon dioxide cylinder to introduce carbon dioxide into the beverage bottle. The carbon dioxide dissolves in the liquid in the beverage bottle.

US20190291063A1 discloses a carbonating system having a nozzle connected to a carbonating head. The carbonating system includes an internal reservoir in which the carbonation takes place. The nozzle comprises a plastic stem and a metal tip.

CN105696012A discloses a system for preparing a therapeutic hydrogeneous beverage, which may be hot or cold. Hydrogen gas is generated by electrolyzing water and led to a multifunction cup that is attached to a plug-in bowl cover. An airway with an aeration head extends from the plug-in bowl cover down into the multifunction cup. The aeration head is provided with a plurality of micropores for dissolving the hydrogen. The airway is of stainless steel and the aeration head may be of stainless steel. A heating rod of stainless steel also extends into the multifunction cup.

EP0073099A1 discloses a carbonator, in accordance with the preamble of claim 1, with a carbonator nozzle that protrudes downward from a carbonator head to which a beverage bottle is to be fastened. The nozzle is made of metal and consists of a first part and a second part with a smooth bend there between. A conduit through the nozzle has a constant cross-section.

EP0245664A2 discloses an apparatus for aerating bottled wine. A delivery tube may be made from stainless steel.

### Summary of the invention

One object of the present disclosure is to provide a carbonator of the initially-mentioned type that is sturdy, has a long life and avoids or minimises beverage contact with plastic material as a result of the beverage being carbonated. Further, the carbonator dissolver nozzle shall be easy to manufacture and minimise icing within the nozzle during introduction of the carbon dioxide into the beverage bottle.

Such a carbonator is according to the present disclosure provided in form of the carbonator of appended claim 1. The invention disclosed herein is defined by the appended claims. Specific embodiments are set out in the dependent claims.

Since the portion of the nozzle that is in contact with the beverage has an outer surface of metal, the beverage will not be in contact with any other material, such as plastic, as a result of being carbonated. Metal may in some aspects be more hygienic than plastic, especially after long time use of the nozzle. Metal may be provided with a fine surface finish and be more resistant to scratching and fatigue than other materials, such as plastic. Further, a nozzle at least partly made of metal may have a high strength.

The present nozzle is advantageously used when carbonating beverage in a non-plastic bottle, such as a glass bottle, whereby the beverage may be enclosed and carbonated avoiding contact with plastic material.

The part of the nozzle that forms the CO₂-gas outlet may advantageously be made of metal. In this way, the outlet may retain its shape and dimensions even after repeated use possibly including being subject to impacts during handling. A metal outlet may also more easily be reshaped and optimised during a design process, e.g. by machining, as compared to an outlet of plastic material. Furthermore, metal may reduce the icing of the nozzle, which may result from the pressure of the CO₂-gas being reduced near the outlet of the nozzle. Also, the stepwise conduit area reduction may result in a less turbulent gas flow which may reduce the icing.

The load bearing parts of the nozzle may be entirely made of metal, the nozzle in addition possibly including non-metal sealing means that are not load bearing. The nozzle may consist of parts entirely made of metal with non-metal sealing material arranged between said metal parts.

In some aspects, which are outside of the scope of the present invention, at least the portion of the nozzle that is immersed in the beverage during use can be entirely made of metal. In this way, not even beverage entering into the nozzle during the carbonation process will contact any other material than metal. The lower half of the nozzle may be made of metal. In some aspects, which are outside of the scope of the present invention, the nozzle can be entirely made of metal.

Preferably, the metal used in the nozzle, either to form an outer component, a CO₂-gas outlet, a load bearing component, or the entire nozzle is food grade metal. Such metals include stainless steel such as SUS304, aluminium such as 3003, 3004 or 5052 or brass such as OT57. Aluminium appears beneficial as it may help reduce icing.

For reasons of easy of manufacture, the area of the conduit is reduced in steps. The conduit comprises a main conduit section, and outlet taper section and an ultimate conduit section. The latter forming the nozzle outlet. Such a conduit may be formed by drilling.

Preferably, the conduit tapers at an angle of 100 degrees or less to form the ultimate conduit section. The outlet taper section thus tapers at an angle of 100 degrees or less. The outlet taper section preferably tapers at an angle of 45 to 90 degrees, most preferably approximately 60 degrees. Brass may form a preferred material for the part of the nozzle that forms the outlet taper section, as brass allows drilling with a small taper angle such as approximately 60 degrees.

Preferably, the ultimate conduit section has a length that does not exceed 1 mm. More preferably, the length of the ultimate conduit section does not exceed 0.5 mm. Preferably, the diameter of the ultimate conduit section does not exceed 1 mm, or 0.5 mm. One advantageous ultimate conduit section has a length of approximately 0.5 mm and a diameter of approximately 0.5 mm.

The conduit preferably comprises a main conduit section and an ultimate conduit section, the main conduit section having an area that is 10 to 50 times the area of the ultimate conduit section. Such a nozzle may be relatively easy to manufacture by drilling. Preferably, the main conduit section extends through at least 80 % of the length of the nozzle. Typically, the ultimate conduit section extends through approximately 1 % of the length of the nozzle.

In some aspects, which are outside of the scope of the present invention, the nozzle can be one-piece. Such a nozzle may be particularly sturdy, easy to handle, and does not require any assembly.

The nozzle may comprise two metal pieces that are adapted to be attached to one another. In this way, one of the metal pieces may form the nozzle outlet that requires high precision manufacture. The metal piece that forms the nozzle outlet may be given a shape that is suitable for high precision manufacture, such as a shape with outer dimensions that correspond each other in size. For example, a cylinder with a height that corresponds to its diameter, e.g. where the height is no longer than three times the diameter.

Preferably, the two metal pieces are a main body part and an outlet part, wherein an ultimate, most downstream, conduit section is formed in the outlet part. The outlet part preferably has a shape with relative dimensions that render the outlet part is suitable for high precision manufacture, as was described in the preceding paragraph.

Preferably, the main body part and the outlet part are adapted to be screwed together, which provides an easy assembly.

The main body part and/or the outlet part may comprise holding means for holding an elastically deformable retaining member, such that the elastically deformable retaining member is deformed upon attaching or assembling the main body part and an outlet part together. The elastically deformable retaining member may retain the main body part and the outlet part together. The holding means may comprise a groove, or may for additional sealing and better retaining comprise two grooves at an axial distance from each other.

The elastically deformable retaining member may be an annular sealing, such as an O-ring.

The present disclosure further provides a method of manufacture of a carbonator dissolver nozzle for the above carbonator. The method comprising the steps of drilling a main conduit section through at least 80 % of the length of the nozzle, and drilling an ultimate conduit section, wherein the main conduit section has a diameter that is at least four times the diameter of the ultimate conduit section.

The main conduit section may be drilled from the inlet end of the carbonator dissolver nozzle and the ultimate conduit section may be drilled from the outlet end of the carbonator dissolver nozzle. In other words, the main conduit section may be drilled in the flow direction through the nozzle whereas the ultimate conduit section is drilled in the opposite direction, i.e. against the flow direction through the nozzle.

Alternatively, the main conduit portion and the ultimate conduit section may be drilled in the same direction, more precisely in the flow direction through the nozzle.

The method may comprise a first step of providing a carbonator dissolver nozzle precursor, which is subsequently subject to the drilling. The precursor is preferably made of metal.

### Brief description of the drawings

The present invention will be described further below by way of examples and with reference to the enclosed drawings, in which:
- Figure 1a: is a perspective view of a one-piece carbonator dissolver nozzle 1 according to a first embodiment, which is outside of the scope of the present invention,
- Figure 1b: is a cross sectional side view corresponding to figure 1a,
- Figure 1c: is an enlarged section of a second embodiment of the downstream end of the dissolver nozzle of figure 1, which is outside of the scope of the present invention,
- Figure 1d: shows an exemplary domestic free-standing carbonator 10, or soda water machine, with a carbonator dissolver nozzle 1 according to the present disclosure,
- Figure 2a: is a perspective exploded view of a carbonator dissolver nozzle 1 according to ta a third embodiment, comprising a treaded main body part 3a and a threaded outlet part 4a,
- Figure 2b: is a cross sectional assembled side view corresponding to figure 2a,
- Figure 2c: is an enlarged section of the downstream end of the dissolver nozzle 1 of figure 2b,
- Figure 2d: is a perspective exploded view of the downstream end of the dissolver nozzle 1 of figure 2b,
- Figure 3a: is a perspective exploded view of a carbonator dissolver nozzle 1 according to ta a fourth embodiment, comprising a receiving main body part 3b and a grooved outlet part 4b,
- Figure 3b: is a cross sectional assembled side view corresponding to figure 3a,
- Figure 3c: is an enlarged section of the downstream end of the dissolver nozzle of figure 3b, and
- Figure 3d: is a perspective view of the outlet part 4b of figures 3a to 3c.

### Detailed description of embodiments

The disclosed embodiments will now be described more fully hereinafter with reference to the accompanying drawings. Like numbers refer to like elements throughout the description of the embodiments and the drawings.

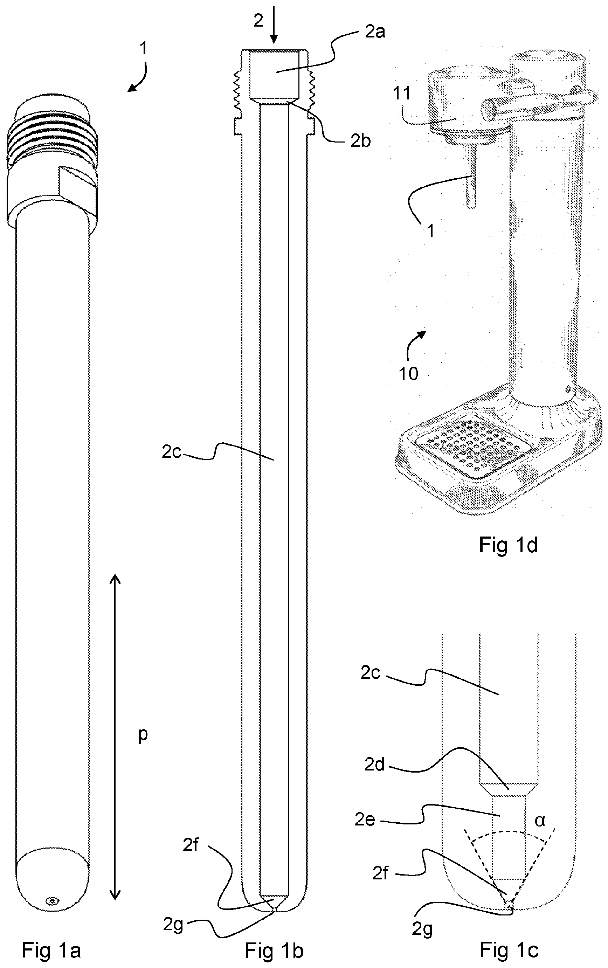

Figure 1 shows a carbonator dissolver nozzle 1, hereinafter nozzle 1, for use with a carbonator 10 of the type shown in figure 1d or a similar soda water machine. The nozzle 1, as is shown in figure 1d, protrudes downward from a carbonator head 11 of the carbonator 10 to which a beverage bottle (not shown) is to be fastened. When a bottle is fastened to the carbonator head 11, the nozzle protrudes downward into the bottle to a position where the nozzle is immersed in the beverage, typically water, within the bottle.

The nozzle 1 of the first embodiment (figures 1a and 1b) comprises an upstream end, which may also be referred to as the upper end or the inlet end, which is attached to the carbonator 10 by of suitable mechanical fitting means. In the present disclosure, the upper end of the nozzle 1 comprises outer threads whereas the carbonator 10, more precisely the carbonator head 11, comprises cooperating inner threads (not shown).

The upper end of the present nozzle 1, below the treads, further comprises two radially opposing flat surfaces such that the nozzle 1 may be gripped and screwed by means of a tool, e.g. a wrench or a spanner. In alternative, the upper end of the nozzle 1 may comprise a polygonal area, or a radial blind hole, allowing the nozzle to be screwed into the carbonator 10 by a suitable tool.

As is shown in figure 1b, a conduit 2 is formed through the nozzle 1 from the upper end to the lower end thereof. The nozzle is thus tubular. The conduit may also be referred to as a gas conduit and provides CO₂ from the carbonator 10 to the beverage contained in the beverage bottle when the carbonator 10 is used. In the embodiments of this disclosure, the nozzle 1 has a circular outer cross section. In the embodiments of this disclosure, the outer form of the nozzle 1 is a straight rod, apart from the upper end where the threads and the flat surfaces are located.

The nozzle has an elongated shape with a length that is approximately eight to ten times its outer diameter. The downstream end of the nozzle, which may also be referred to as the lower end or the outlet end, is rounded so as to not damage e.g. the beverage bottle to be used with the carbonator 10, or the hand of a user. The outlet end comprises a central outlet opening through which CO₂ gas is ejected when the carbonator 10 is used. The outlet opening is formed by the most downstream section 2g of the conduit as explained below and illustrated in the figures.

Depending of the amount of water filled into the bottle, roughly half the nozzle 1 is immersed in water when the carbonator 10 is used. In figure 1a, the portion p of the nozzle 1 that is typically immersed in water during use is indicated by a double-ended arrow denoted p.

The conduit 2 comprises a most upstream section 2a that forms a nozzle inlet and a most downstream section 2g that forms a nozzle outlet. Via a first frustoconical taper section 2b, the most upstream section 2a converges into a main conduit section 2c, or main section 2c. The main section 2c forms the chief part of the conduit 2 length. In the embodiment of figure 1a and 1b, the main section 2c forms approximately 90 % of the conduit 2 length.

In the first embodiment, the main section 2c converges via an outlet taper section 2f into the most downstream section 2g. The outlet taper section 2f has a taper angle α (the angle α is indicated in figure 1c that discloses the second embodiment) of approximately 90 degrees. The taper angle α is defined as the angle formed between the opposing sidewalls of a frustoconical taper section. In another example (not shown), the outlet taper section of a nozzle 1 of the first embodiment may have an outlet taper angle α of approximately 60 degrees.

Thus, the conduit 2 of the first embodiment comprises a most upstream section 2a, an inlet taper section 2b, a main section 2c, an outlet taper section 2f and a most downstream section 2g fluidly connected in that order. The most upstream section 2a, the main section 2c and the most downstream section 2g are straight and of circular cross section and may be formed by drilling. The taper sections 2b, 2f are frustoconical and may be formed by drilling, more precisely by a conical drill tip.

The inlet taper section 2b has a taper angle that is larger than 90 degrees, approximately 120 degrees. When a nozzle 1 of the present disclosure is attached to a carbonator 10, there is a tubular carbonator head outlet (not shown) protruding into the most upstream section 2a to rest against the inlet taper section. An O-ring (not shown) of the carbonator 10 may be arranged between the carbonator head outlet and the inlet taper section 2b.

Figure 1c illustrates a second embodiment of the nozzle 1, only showing the downstream end of the nozzle. The second embodiment differs from the first embodiment in that it comprises an intermediate taper section 2d, which is positioned between the inlet taper section 2b and the outlet taper section 2f. The second embodiment further comprises a step section 2e that connects the intermediate taper section 2d and outlet taper section 2f. The outlet taper section 2f of the second embodiment has a taper angle α of approximately 60 degrees.

It is believed advantageous for the gas flow through the nozzle 1 to reduce the area of the conduit 2 in several steps to the final most downstream section 2g that forms a nozzle outlet. Such a stepwise area reduction may result in a less turbulent gas flow which appears to reduce the icing. A continuous area reduction may be difficult and/or costly to manufacture, when at least a portion of the conduit is formed in metal.

The conduit 2 of the second embodiment (figure 1c) comprises a most upstream section 2a, an inlet taper section 2b, a main section 2c, an intermediate taper section 2d, a step section 2e, an outlet taper section 2f and a most downstream section 2g. The most upstream section 2a, the main section 2c, the step section 2e and the most downstream section 2g are straight sections of circular cross section that may be formed by drilling. The taper sections 2b, 2f, 2f are frustoconical and may be formed by drilling.

The nozzles 1 of the first and second embodiments are one-piece metal nozzles 1.

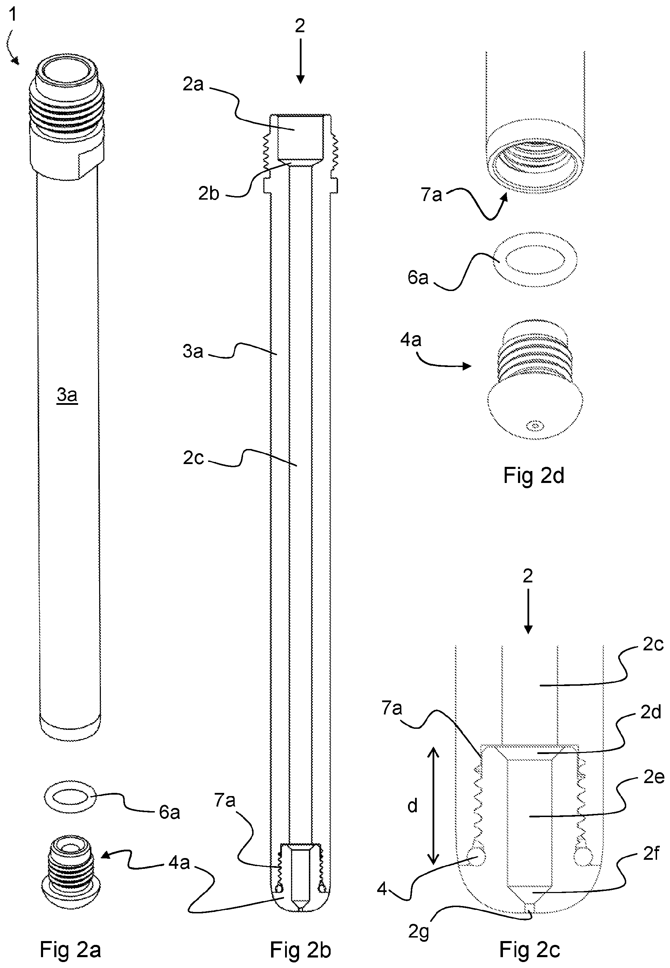

Figures 2a to 2d illustrate a third embodiment of the nozzle 1. In this embodiment, the nozzle 1 consists of two metal pieces, in the form of a main body part and an outlet part, and a sealing 6a. More precisely, the nozzle of the third embodiment comprises a treaded main body part 3a, a threaded outlet part 4a and an O-ring 6a.

When the treaded main body part 3a and the threaded outlet part 4a are attached to one another by means of the threads, the resulting nozzle 1 has a very similar outer shape as the one of the first or second embodiments. The only visual difference being the joint between the treaded main body part 3a and the threaded outlet part 4a.

The treaded main body part 3a comprises a lower recess 7a, which is open in the downstream direction, into which the threaded outlet part 4a is screwed when the nozzle 1 is assembled. The lower recess 7a is cylindrical and comprises an inner thread, see figure 2c. The diameter of the lower recess 7a approximately equals the mean value of the diameters the main conduit section 2c and the outer diameter of the treaded main body part 3a. The main conduit section 2c of the third embodiment leads from the inlet taper section 2b to the lower recess 7a.

Once the threaded outlet part 4a is screwed into the lower recess 7a of the treaded main body part 3a, the threaded outlet part 4a forms the intermediate taper section 2d that has been described above. The upper, or upstream, end of the threaded outlet part 4a now lies flush against the annular inner end surface of the lower recess, as is shown in figure 2c.

The intermediate taper section 2d formed by the threaded outlet part 4a has an upstream diameter that exceeds the diameter of the main conduit section 2c, even though in another example (not shown) the upstream diameter may equal the diameter of the main conduit section 2c.

Once assembled, the threaded outlet part 4a forms the step section 2e that has been described above. The threaded outlet part 4a further forms the outlet taper section 2f and the most downstream section 2g. The outlet taper angle α of the third embodiment is approximately 90 degrees.

The threaded outlet part 4a is essentially cylindrical with an outer thread on the outside of the portion that forms the step section 2e. The downstream end of the threaded outlet part 4a has an outer diameter that equals the diameter of the main body part 3a. The downstream end of the threaded outlet part is rounded such that the nozzle of the third embodiment when assembled has the same outer form as the nozzle of the first or second embodiments.

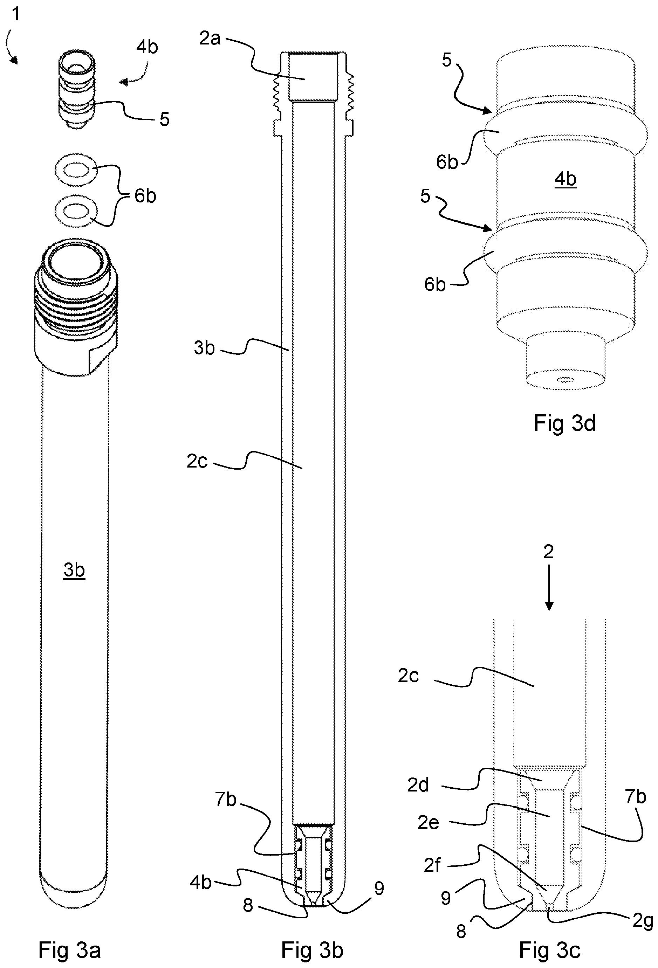

Figures 3a to 3d illustrate a fourth embodiment of the nozzle 1. In this embodiment, as in the third embodiment, the nozzle 1 consists of a main body part and an outlet part in the form of two metal pieces. Said metal pieces are formed of a receiving main body part 3b and a grooved outlet part 4b. There are also two retaining sealings 6b (O-rings) that not only seal the metal pieces 3b, 4b but also retain them in an assembled condition.

The receiving main body part 3b has an outer shape that is similar to the nozzle 1 of the first or second embodiments, apart from a lower circular opening 8 formed by an annular lip portion 9. The receiving main body part 3b of the fourth embodiment has a main conduit section 2c of approximately double the diameter as compared to the nozzles 1 of the earlier embodiments. The receiving main body part 3b of the fourth embodiment includes a lower void 7b into which the grooved outlet part 4b is inserted when the nozzle 1 is assembled. The grooved outlet part 4b extends into the lower circular opening 8 and forms the most downstream section 2g of the conduit 2, thus the outlet opening of the nozzle 1.

The diameter of the lower void 7b is smaller than the diameter of the main conduit section 2c of the fourth embodiment, even though in another example (not shown) the diameter of the lower void 7b may equal the diameter of the main conduit section 2c. The inner sidewall of the lower void 7b is smooth.

The grooved outlet part 4b is of a generally cylindrical form, with an outer dimeter that is slightly smaller than the lower void. The outer circumference of the grooved outlet part 4b comprises at least one, in this example two grooves 5 as is illustrated in figure 3d. As an alternative, the grooves 5 may be formed in the inner wall of the lower void 7b. The grooves 5 and the retaining sealings 6b are mutually shaped such that the retaining sealings 6b fit in the grooves while protruding above the surface of the cylindrical form of the grooved outlet part 4b.

Upon assembly, the grooved outlet part 4b with the two retaining sealings 6b arranged in the grooves 5 is pushed into the main conduit section 2c of the receiving main body part 3b via the nozzle inlet (formed by the most upstream section 2a), though the main conduit section 2c and into the lower void 7b.

The grooved outlet part 4b may be pushed into the lower void 7b by means of a pin or a similar elongated object, until the grooved outlet part 4b reaches the lowermost position resting against the inner surface of the annular lip portion 9. In this position, a lower (downstream) protruding portion of the grooved outlet part 4b extends into the lower circular opening 8 of the grooved outlet part 4b. The most downstream section 2g is formed in the lower protruding portion of the grooved outlet part 4b. The outer diameter of the lower protruding portion and the inner diameter of the lower circular opening 8 are selected such that the lower protruding portion snugly fits in the lower circular opening 8, as is illustrated in figure 3c.

When the grooved outlet part 4b is pushed into the lower void 7b, the retaining sealings 6b are elastically deformed, or compressed, between the grooves 5 and the inner sidewall of the lower void 7b. As the retaining sealings 6b after assembly strive to return to their non-deformed form, they exert a radial expansive force between the grooved outlet part 4b and the lower void 7b and thus the grooved outlet part 4b is retained within the lower void 7b.

The elastic retaining sealings 6b have an inner diameter that is smaller than the outer diameter of the grooved outlet part 4b and are thus elastically held in the grooves 5. The grooves 5 provide a form fit for the retaining sealings 6b. Once the grooved outlet part 4b is fitted in the lower void 7b, the retaining sealings 6b hinder the grooved outlet part 4b from moving axially within the lower void 7b by frictional forces between the retaining sealings 6b and the inner wall of the lower void 7b.

In the third embodiment (figures 2a to 2d) and the fourth embodiment (figures 3a to 3d) the nozzle 1 comprises a separate metal piece or insert (the threaded outlet part 4a and the grooved outlet part 4b, respectively) that forms the ultimate conduit section 2g. As has been mentioned, the ultimate conduit section 2g forms the outlet opening of the nozzle 1. For this reason, it is desired to manufacture the ultimate conduit section 2g with high precision. It is believed that a straight ultimate conduit section 2g with a smooth inner surface forms a less turbulent CO₂ flow, thereby minimising any icing that may partially or fully block the conduit 2 near its outlet.

The outlet parts 4a, 4b both have a form that is advantageous for precision manufacture, as their length is approximately the same as their width. In the examples shown, the outlet part lengths are approximately 1.5 to 2 times the outlet part widths. As a comparison, the entire nozzle 1 has a length that is approximately eight to ten times its width and thus precision drilling (of the most downstream section 2g) there through requires specific tooling and skill.

If the conduit 2 through the nozzle 1 of the first or second embodiment is to be formed by drilling, the main section 2c may be drilled from the inlet end of the nozzle 1 and the most downstream section 2g may be drilled from the outlet end of the nozzle.

Alternatively, the larger main section 2c may be beneficial for precision drilling of the most downstream section 2g through the main section 2c as a drill with an enlarged shank can be used. The most downstream section 2g may thus be drilled in the direction of the gas (CO₂) flow through the main section 2c.

In the embodiments of this disclosure, the most downstream section 2g is a narrow gas passage. The most downstream section 2g has a diameter of less than 1 mm, preferably approximately 0.5 mm. The most downstream section 2g has a length (in the direction of gas flow or longitudinal direction of the nozzle 1) of less than 1 mm, preferably approximately 0.5 mm. Such dimensions of an outlet opening have proven suitable for a carbonator 9 of the type referred to above.

In order to reduce the icing, it appears that the relationship between dimensions of the outlet, i.e. the length and transverse area of the most downstream section 2g, and the penultimate straight conduit section (2c or 2e) is of importance. Also, the taper angle α of the outlet taper section 2f shall preferably be below 100 degrees. In the embodiments of the present disclosure, the transverse area of the respective penultimate straight conduit section is 10-50 times the transverse area of the most downstream section 2g. It appears that a lower ratio is advantageous. In the second, third and fourth embodiments the transverse area of the respective penultimate straight conduit section 2e is 10-20 times the transverse area of the most downstream section 2g. Also, it appears the length of the most downstream section 2g shall essentially equal its diameter.

## Claims

1. A carbonator (10) for producing carbonated beverage comprising a carbonator head (11) to which a beverage bottle may be fastened and a carbonator dissolver nozzle (1) for introducing CO₂-gas into a beverage , wherein the nozzle (1) is adapted to protrude downward from the carbonator head (11) and into the beverage bottle, the nozzle (1) comprising
- an upstream end that is adapted to be attached to the carbonator head (11),
- a downstream end that is adapted to be immersed in the beverage within the bottle, and
- a conduit (2) leading though the nozzle (1) from the upstream end to the downstream end, wherein
at least the portion (p) of the nozzle (1) that is immersed in the beverage during use consists of parts entirely made of metal with non-metal sealing material (6) between said parts, wherein at least the portion (p) of the nozzle (1) that is immersed in the beverage during use has an outer surface of metal, and wherein
the area of the conduit (2) is reduced in steps and comprises a main conduit section (2c), and outlet taper section (2f) and an ultimate conduit section (2g).

2. The carbonator (10) of claim 1, wherein the load bearing parts of the nozzle (1) are entirely made of metal.

3. The carbonator (10) of any preceding claim, wherein the metal is food grade metal.

4. The carbonator (10) of any preceding claim, wherein the metal is stainless steel such as SUS304, aluminium such as 3003, 3004 or 5052 or brass such as OT57.

5. The carbonator (10) of any preceding claim, wherein the outlet taper section (2f) tapers at an angle (α) of 100 degrees or less to form the ultimate conduit section (2g).

6. The carbonator (10) of any preceding claim, wherein the ultimate conduit section (2g) has a diameter that does not exceed 1 mm and a length that does not exceed 1 mm.

7. The carbonator (10) of any preceding claim, wherein the main conduit section (2c) extends through at least 80 % of the length of the nozzle (1).

8. The carbonator (10) of any preceding claim, wherein the area of the main conduit section (2c) is 10 to 50 times the area of the ultimate conduit section (2g).

9. The carbonator (10) of any one of claims 1 to 8, wherein the nozzle (1) comprises two metal pieces that are adapted to be attached to one another.

10. The carbonator (10) of claim 9, wherein the two metal pieces are a main body part (3) and an outlet part (4), wherein the ultimate, most downstream, conduit section (2g) is formed in the outlet part (4).

11. The carbonator (10) of claim 10, wherein the main body part (3) and the outlet part (4) are adapted to be screwed together.

12. The carbonator (10) of claim 10, wherein the main body part (3b) and/or the outlet part (4b) comprises holding means (5) for holding an elastically deformable retaining member (6) such that the elastically deformable retaining member (6) is deformed upon attaching the main body part (3b) and the outlet part (4b) together, whereby the elastically deformable retaining member (6) retain the main body part (3b) and the outlet part (4b) together.

13. A method of manufacture of a carbonator dissolver nozzle (1) according to the one of the carbonator (10) of any preceding claim, comprising the steps of
- drilling the main conduit section (2c) through at least 80 % of the length of the nozzle (1), and
- drilling the ultimate conduit section (2g)
the main conduit section (2c) having a diameter that is at least four times the diameter of the ultimate conduit section (2g).

## Patentansprüche

1. Sprudelgerät (10) zum Erzeugen von kohlensäurehaltigen Getränken, welches einen Sprudelgerätkopf (11) aufweist, an welchem eine Getränkeflasche befestigt werden kann, und eine Sprudelgerätverteilungsdüse (1) zum Einleiten von CO₂-Gas in ein Getränk, wobei die Düse (1) so ausgebildet ist, dass sie von dem Sprudelgerätkopf nach unten und in die Getränkeflasche vorsteht, wobei die Düse (1) Folgendes aufweist:
- ein stromaufwärts liegendes Ende, welches zur Befestigung an dem Sprudelgerätkopf (11) ausgebildet ist,
- ein stromabwärts gelegenes Ende, welches so ausgebildet ist, dass es in das Getränk in der Flasche eingetaucht ist, und
- eine Leitung (2), welche durch die Düse (1) vom stromaufwärts liegenden Ende zum stromabwärts liegenden Ende führt, wobei
zumindest der Teil (p) der Düse (1), der während der Verwendung in das Getränk eingetaucht ist, aus Einzelteilen besteht, die vollständig aus Metall gemacht sind, wobei ein nicht-metallisches Dichtungsmaterial (6) zwischen den Einzelteilen ist, wobei zumindest der Teil der Düse (1), der während der Verwendung in dem Getränk eingetaucht ist, eine Außenfläche aus Metall hat, wobei
der Querschnitt der Leitung (2) in Stufen verringert ist und einen Hauptleitungsabschnitt (2c) und einen Auslassverjüngungsabschnitt (2f) und einen abschließenden Leitungsabschnitt (2g) aufweist.

2. Sprudelgerät (10) nach Anspruch 1, wobei die lasttragenden Teile der Düse (1) vollständig aus Metall gemacht sind.

3. Sprudelgerät (10) nach einem vorhergehenden Anspruch, wobei das Metall lebensmittelechtes Metall ist.

4. Sprudelgerät (10) nach einem vorhergehenden Anspruch, wobei das Metall rostfreier Stahl ist, wie beispielsweise SUS304, Aluminium, wie beispielsweise 3003, 3004 oder 5052, oder Messing, wie beispielsweise OT57.

5. Sprudelgerät (10) nach einem vorhergehenden Anspruch, wobei der Auslassverjüngungsabschnitt (2f) sich mit einem Winkel (α) von 100 Grad oder weniger verjüngt, um den abschließenden Leitungsabschnitt (2g) zu formen.

6. Sprudelgerät (10) nach einem vorhergehenden Anspruch, wobei der abschließende Leitungsabschnitt (2g) einen Durchmesser hat, der 1 mm nicht überschreitet und eine Länge hat, die 1 mm nicht überschreitet.

7. Sprudelgerät (10) nach einem vorhergehenden Anspruch, wobei der Hauptleitungsabschnitt (2c) sich durch mindestens 80% der Länge der Düse (1) erstreckt.

8. Sprudelgerät (10) nach einem vorhergehenden Anspruch, wobei der Querschnitt des Hauptleitungsabschnittes (2c) 10 bis 50 Mal der Querschnitt des abschließenden Leitungsabschnittes (2g) ist.

9. Sprudelgerät (10) nach einem der Ansprüche 1 bis 8, wobei die Düse (1) zwei Metallteile aufweist, die zur Befestigung aneinander ausgebildet sind.

10. Sprudelgerät (10) nach Anspruch 9, wobei die zwei Metallteile ein Hauptkörperteil (3) und ein Auslassteil (4) sind, wobei der abschließende, am weitesten stromabwärts liegende, Leitungsabschnitt (2g) in dem Auslassteil (4) geformt ist.

11. Sprudelgerät (10) nach Anspruch 10, wobei der Hauptkörperteil (3) und der Auslassteil (4), die zur Verschraubung miteinander ausgebildet sind.

12. Sprudelgerät (10) nach Anspruch 10, wobei der Hauptkörperteil (3b) und der Auslassteil (4b) Haltemittel (5) aufweisen, um ein elastisch verformbares Halteelement (6) zu halten, so dass das elastisch verformbare Halteelement (6) beim Anbringen des Hauptkörperteils (3b) und des Auslassteils (4b) aneinander verformt wird, wodurch das elastisch verformbare Halteelement (6) den Hauptkörperteil (3b) und den Auslassteil (4b) zusammenhält.

13. Verfahren zur Herstellung einer Sprudelgerätverteilungsdüse (1) gemäß einem Sprudelgerät (10) nach einem vorhergehenden Anspruch, welches folgende Schritte aufweist:
- Bohren des Hauptleitungsabschnittes (2c) durch mindestens 80% der Länge der Düse (1), und
- Bohren des abschließenden Leitungsabschnittes (2g)
wobei der Hauptleitungsabschnitt (2c) einen Durchmesser hat, der mindestens vier Mal der Durchmesser des abschließenden Leitungsabschnittes (2g) ist.

## Revendications

1. Saturateur (10) pour produire une boisson gazeuse comprenant une tête de saturateur (11) à laquelle une bouteille de boisson peut être fixée et une buse de dissolution de saturateur (1) pour introduire du gaz CO₂ dans une boisson, dans lequel la buse (1) est adaptée pour faire saillie vers le bas de la tête de saturateur (11) et dans la bouteille de boisson, la buse (1) comprenant :
- une extrémité amont qui est adaptée pour être fixée à la tête de saturateur (11),
- une extrémité aval qui est adaptée pour être immergée dans la boisson à l'intérieur de la bouteille, et
- une conduite (2) menant à travers la buse (1) depuis l'extrémité amont à l'extrémité aval, dans lequel
au moins la partie (p) de la buse (1) qui est immergée dans la boisson pendant l'utilisation se compose de parties entièrement réalisées en métal avec un matériau étanche non métallique (6) entre lesdites parties, dans lequel au moins la partie (p) de la buse (1) qui est immergée dans la boisson pendant l'utilisation présente une surface extérieure de métal, dans lequel
la surface de la conduite (2) est réduite par étapes et comprend une section de conduite principale (2c), et une section effilée de sortie (2f) et une section de conduite ultime (2g).

2. Saturateur (10) selon la revendication 1, dans lequel les parties porteuses de charge de la buse (1) sont entièrement réalisées en métal.

3. Saturateur (10) selon l'une quelconque des revendications précédentes, dans lequel le métal est un métal de qualité alimentaire.

4. Saturateur (10) selon l'une quelconque des revendications précédentes, dans lequel le métal est de l'acier inoxydable tel que SUS304, de l'aluminium tel que 3003, 3004 ou 5052 ou du laiton tel que OT57.

5. Saturateur (10) selon l'une quelconque des revendications précédentes, dans lequel la section effilée de sortie (2f) s'effile selon un angle (α) de 100 degrés ou moins pour former la section de conduite ultime (2g).

6. Saturateur (10) selon l'une quelconque des revendications précédentes, dans lequel la section de conduite ultime (2g) présente un diamètre qui n'excède pas 1 mm et une longueur qui n'excède pas 1 mm.

7. Saturateur (10) selon l'une quelconque des revendications précédentes, dans lequel la section de conduite principale (2c) s'étend à travers au moins 80 % de la longueur de la buse (1).

8. Saturateur (10) selon l'une quelconque des revendications précédentes, dans lequel la surface de la section de conduite principale (2c) est 10 à 50 fois la surface de la section de conduite ultime (2g).

9. Saturateur (10) selon l'une quelconque des revendications 1 à 8, dans lequel la buse (1) comprend deux pièces métalliques qui sont adaptées pour être fixées l'une à l'autre.

10. Saturateur (10) selon la revendication 9, dans lequel les deux pièces métalliques sont une partie de corps principale (3) et une partie de sortie (4), dans lequel la section de conduite ultime, le plus en aval (2g), est formée dans la partie de sortie (4).

11. Saturateur (10) selon la revendication 10, dans lequel la partie de corps principale (3) et la partie de sortie (4) sont adaptées pour être vissées ensemble.

12. Saturateur (10) selon la revendication 10, dans lequel la partie de corps principale (3b) et/ou la partie de sortie (4b) comprennent des moyens de maintien (5) pour maintenir un élément de retenue déformable élastiquement (6) de sorte que l'élément de retenue déformable élastiquement (6) soit déformé suite à la fixation de la partie de corps principale (3b) et la partie de sortie (4b) ensemble, moyennant quoi l'élément de retenue déformable élastiquement (6) retient la partie de corps principale (3b) et la partie de sortie (4b) ensemble.

13. Procédé de fabrication d'une buse de dissolution de saturateur (1) selon l'un des saturateurs (10) selon l'une quelconque des revendications précédentes, comprenant les étapes consistant à
- percer la section de conduite principale (2c) à travers au moins 80 % de la longueur de la buse (1), et
- percer la section de conduite ultime (2g)
la section de conduite principale (2c) présentant un diamètre qui s'élève à au moins quatre fois le diamètre de la section de conduite ultime (2g).
